# EUROPÄISCHE PATENTSCHRIFT

(11) **EP 1 012 698 B1**
(45) Veröffentlichungstag und Bekanntmachung des Hinweises auf die Patenterteilung: **22.08.2001**
(21) Anmeldenummer: 98937411.1
(22) Anmeldetag: 26.06.1998
(51) Int. Cl.: G06F 3/033

(54) **VORRICHTUNG ZUR DARSTELLUNG UND VIRTUELLEN EINGABE VON DATEN**
DEVICE FOR THE DISPLAY AND VIRTUAL INPUT OF DATA
DISPOSITIF POUR LA REPRESENTATION ET L'ENTREE VIRTUELLE DE DONNEES

(30) Priorität: 08.09.1997 DE 19739285
(43) Veröffentlichungstag der Anmeldung: 28.06.2000
(73) Patentinhaber: Wincor Nixdorf GmbH & Co KG, 33106 Paderborn (DE)
(72) Erfinder: LUTZ, Bernhard, D-33129 Delbrück (DE)
(86) Internationale Anmeldenummer: DE9801748
(87) Internationale Veröffentlichungsnummer: WO9913395

(56) Entgegenhaltungen:
- EP-A- 0 715 248
- HIROSHI ISHII ET AL: "ITERATIVE DESIGN OF SEAMLESS COLLABORATION MEDIA" COMMUNICATIONS OF THE ASSOCIATION FOR COMPUTING MACHINERY, Bd. 37, Nr. 8, 1. August 1994, Seiten 83-97, XP000484285

## Beschreibung

Die Erfindung betrifft eine Vorrichtung zur Darstellung und virtuellen Eingabe von Daten auf einem Arbeitsschirm mit einer bildgebenden Einheit zum Abbilden einer Bildmaske auf dem Arbeitsschirm, einer bildaufnehmenden Einheit zur optischen Aufnahme der dargestellten Bildmaske und einer mit beiden Einheiten in Signalverbindung stehenden Datenverarbeitungseinrichtung zur Steuerung der bildgebenden Einheit und zur Verknüpfung von von der bildaufnehmenden Einheit erfaßten Bildelementen mit Bildkoordinaten der auf dem Arbeitsschirm abgebildeten Bildmaske, wobei der Arbeitsschirm von einem Abschnitt einer aus einem lichtdurchlässigen und lichtstreuenden Material bestehenden Tischplatte eines Tisches gebildet ist und die bildgebende Einheit unterhalb und die bildaufnehmende Einheit oberhalb der Tischplatte angeordnet sind. Eine solche Anordnung ist aus dem Aufsatz "Iterative Design of Seamless Collaboration Media" in "Communications of the ACM", Vol. 37, No. 8, August 1994, P. 83-97 bekannt.

In Dienstleistungsgeschäften, insbesondere in Banken und Versicherungswesen wird zunehmend die Anforderung gestellt, während einer Kundenberatung auch eine informationstechnische Ausstattung zur Verfügung zu haben. Üblicherweise sind die Arbeitsplätze von Kundenberatern zwar mit einem Standard-PC (Monitor, Tastatur, Maus, Drucker usw.) ausgestattet. Die Anordnung dieser Komponenten auf einem Schreibtisch erlaubt jedoch in der Regel nicht das gemeinsame Einsehen der Informationen auf dem Monitor bzw. die gemeinsame interaktive Steuerung der Informationssoftware durch Berater und Kunden. Insbesondere wenn mehrere Kunden, beispielsweise ein Ehepaar durch den Berater informiert werden sollen, gestaltet sich eine sinnvolle Anordnung der üblichen informationstechnischen Komponenten äußerst schwierig.

In der deutschen Patentanmeldung 197 08 240 wurde bereits eine Vorrichtung mit einem sogenannten virtuellen Touch Screen vorgeschlagen. Ein Projektor projiziert eine Benutzeroberfläche von oben auf einen Schirm. Ferner ist oberhalb des Schirms eine Infrarotlichtquelle angeordnet. Neben dem Projektor schließlich befindet sich eine Infrarotkamera, die das von der Benutzeroberfläche oder einem Gegenstand oberhalb derselben, beispielsweise einem sich über die Benutzeroberfläche bewegenden Finger reflektierte Licht aufnimmt. Mit Hilfe der Datenverarbeitungseinrichtung kann die mittels der Infrarotkamera erfaßte Lage des Fingers innerhalb der Benutzeroberfläche festgestellt und somit beispielsweise die Fingerspitze bestimmten Koordinaten innerhalb der Benutzeroberfläche, d.h. einem virtuellen Schalter zugeordnet werden.

Der Erfindung liegt die Aufgabe zugrunde, für einen Arbeitsplatz zusätzliche Visualisierungs- und Steuerungsmöglichkeiten vorzusehen, welche die bisher eingesetzte Büro- und PC-Ausstattung sinnvoll ergänzt.

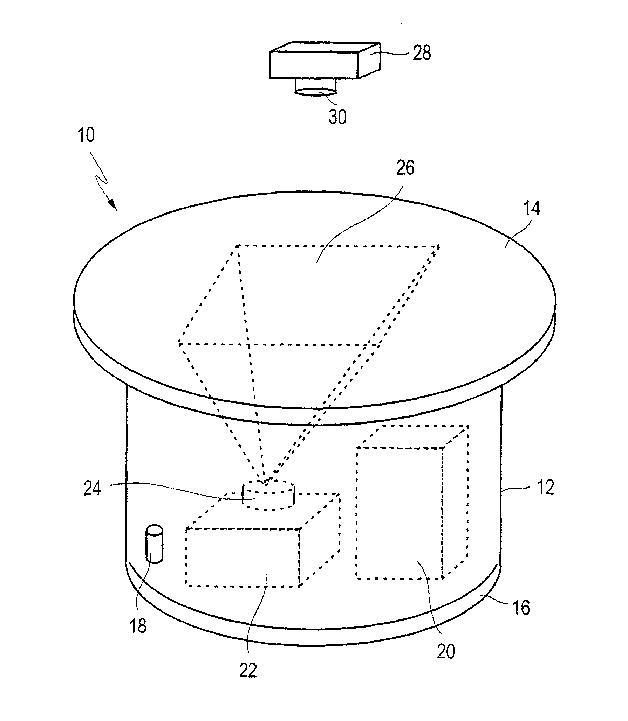

Diese Aufgabe wird ausgehend von einer Vorrichtung der eingangs genannten Art dadurch gelöst, daß der Tisch zusammen mit der Abbildung der Bildmaske um eine vertikale Achse drehbar ist und daß dem Tisch ein mit der Datenverarbeitungseinrichtung in Verbindung stehender Drehwinkelmesser zum Erfassen des Drehwinkels derart zugeordnet ist, daß die Position des durch die bildaufnehmende Einheit erzeugten Bildes relativ zur Bildmaske stets gleich ist.

An einem Beraterplatz, der mit der erfindungsgemäßen Vorrichtung ausgestattet ist, können beispielsweise ein Berater und mehrere Kunden zum Beratungsgespräch an dem Beratertisch Platz nehmen. Soll eine in der Datenverarbeitungseinrichtung gespeicherte Information dargestellt werden, so wird die bildgebende Einheit, beispielsweise ein Videoprojektor, von der Datenverarbeitungseinrichtung aktiviert. Das entsprechende Bild wird auf die Rückseite des lichtdurchlässigen, lichtstreuenden Abschnittes der Tischfläche projiziert und dadurch auf der Oberseite der Tischoberfläche sichtbar. Das hat den Vorteil, daß auch bei mehreren Personen die Bildmaske nicht abgeschattet wird, da das Bild von unten her auf die Tischplatte projiziert wird. Darüber hinaus ermöglicht diese Anordnung eine auch ästhetisch ansprechende Ausführung des Beraterplatzes.

Die beispielsweise an der Decke angeordnete bildaufnehmende Einheit, vorzugsweise eine Videokamera, nimmt das Bild auf der Tischoberfläche auf. Die Bildsignale werden der Datenverarbeitungseinrichtung zugeführt. Mit einem geeigneten Programm in der Datenverarbeitungseinrichtung, welches das Erkennen der Position eines Objektes ermöglicht, das über die Bildmaske auf der Tischoberfläche bewegt wird, können wie bei einem bekannten Touch Screen nun Daten eingegeben werden, und zwar sowohl von einem Kunden als auch von seinem Berater.

Gerade für die Verwendung des Arbeitsplatzes als Beraterplatz ist es von großem Vorteil, daß der Tisch um eine vertikale Achse drehbar ist, wobei dem Tisch ein mit der Datenverarbeitungseinrichtung in Verbindung stehender Drehwinkelmesser zum Erfassen des Drehwinkels zugeordnet ist. Dadurch entsteht die Möglichkeit, daß der Berater bei Bedarf die Bildmaske so dreht, daß der Kunde besser Einsicht nehmen kann. Die Erfassung des Drehwinkels und die Weitergabe dieses Drehwinkels an die Datenverarbeitungseinrichtung gibt die Möglichkeit, entweder die bildaufnehmende Einheit, also beispielsweise die an der Decke des Raumes angeordnete Videokamera synchron zu der Drehung des Tisches über einen entsprechenden Stellmechanismus zu drehen oder aber das Bild lediglich rechnerisch in der Datenverarbeitungseinrichtung selbst zu drehen, so daß die Position der bildaufnehmenden Einheit relativ zur Bildmaske tatsächlich oder zumindest rechnerisch erhalten bleibt.

Vorzugsweise ist die Datenverarbeitungseinrichtung mit der bildgebenden und/oder der bildaufnehmenden Einheit durch Sende-/Empfangseinrichtungen zur drahtlosen Signalübertragung verbunden. Dadurch kann der Tisch ohne die Behinderung durch entsprechende Signalkabel bewegt werden.

Die bildgebende Einheit ist in einem die Tischplatte tragenden Tischfuß angeordnet, in dem vorzugsweise auch die Datenverarbeitunseinrichtung untergebracht sein kann. Die Geräte sind somit nicht sichtbar, was die Freiheit bei der ästhetischen Gestaltung des Arbeitsplatzes erheblich vergrößert.

Als Datenverarbeitungseinrichtung genügt ein herkömmlicher Personal Computer.

Durch die Verwendung des virtuellen Touch Screen sind keine mechanischen Einbauten in der eigentlichen Tischoberfläche erforderlich. Diese bleibt völlig geschlossen und kann entsprechend den ästhetischen Anforderungen frei gestaltet werden. Durch die Unterbringung der bildgebenden Einheit in dem Tischsockel ergeben sich kleine Abstände zwischen dem die bildgebende Einheit bildenden Projektor und der Projektionsfläche. Daher können die optischen Anforderungen an dem Projektor und somit die Kosten desselben niedrig gehalten werden. Umweltbedingte Lichteinflüsse lassen sich dabei leichter beherrschen. Der Projektor und die Datenverarbeitungseinrichtung sind zu Service- und Wartungszwecken leicht zugänglich. Die an der Decke angeordnete Videokamera-Einheit ist in der Regel wartungsfrei und kann über das Lichtnetz in der Decke mit Strom versorgt werden. Eine Kabelverbindung entfällt bei drahtloser Signalübermittlung zwischen Videokamera und Datenverarbeitungseinrichtung. Die Justage der Videokamera, d.h. die Festlegung des Bildabschnittes in Relation zum Abstand zwischen Tischoberfläche und Kamera kann auf einfache Weise durchgeführt werden, wenn die Kamera mit einem Zoomobjektiv ausgestattet ist.

Die Anforderungen an den mechanischen Aufbau des Tisches sind sehr einfach, so daß dieser leicht an die verschiedensten Gestaltungswünsche angepaßt werden kann. In den Sockel des Tisches können natürlich auch noch weitere PC-Peripherieeinheiten wie ein Drucker, ein Scanner oder ein Kartenleser integriert werden, sofern dies für den betreffenden Arbeitsplatz sinnvoll erscheint.

Die folgende Beschreibung erläutert in Verbindung mit der beigefügten Zeichnung die Erfindung anhand eines Ausführungsbeispieles. Die einzige Figur zeigt eine schematische teilperspektivische Darstellung eines Arbeitsplatzes, der mit einer erfindungsgemäßen Vorrichtung ausgerüstet ist.

In der Figur erkennt man einen allgemein mit 10 bezeichneten Tisch mit einem zylindrischen Fuß 12 und einer auf diesem angeordneten kreisscheibenförmigen Tischplatte 14. Der Fuß 12 ruht auf einem Drehsockel 16, gegenüber dem er frei drehbar ist. Der Drehwinkel des Tisches 10 gegenüber dem ortsfesten Drehsockel 16 kann mit einem Drehwinkelgeber 18 ermittelt werden.

Innerhalb des Tischfußes 12 ist eine Datenverarbeitungseinrichtung in Form eines Personal Computers (PC) 20 angeordnet, mit dem der Drehwinkelgeber 18 und ein Videoprojektor 22 in signalübertragender Verbindung stehen. Der Videoprojektor 22 kann über ein Objektiv 24 eine Bildmaske 26 auf die Rückseite der Tischplatte 14 projizieren. Diese besteht zumindest in dem Projektionsbereich aus einem lichtdurchlässigen, aber mattierten Material, das darüber hinaus in geeigneter Weise eingefärbt sein kann. Es kann hierzu sowohl Glas als auch Akryl oder ein ähnliches transparentes Material verwendet werden. Auf diese Weise wird das von dem Videoprojektor 22 projizierte Bild auf der Oberseite der Tischplatte 14 sichtbar.

Oberhalb des Tisches 10 und in Flucht mit dem Videoprojektor 22 ist eine Videokamera 28 an der Raumdecke angeordnet. Selbstverständlich könnte auch ein eigenes Gestell für die Videokamera verwendet werden, wobei dies jedoch in der Regel funktionelle und ästhetische Nachteile hat. Die Videokamera 28 ist mit einem Zoomobjektiv 30 ausgestattet, das die Wahl eines geeigneten Bildausschnittes ermöglicht. Zwischen der Videokamera 28 und dem PC 20 besteht eine drahtlose Signalverbindung durch geeignete Sende-/Empfangseinrichtungen.

Einen Tisch können mehrere Personen teilen. Die drehbare Lagerung des Tisches 10 auf dem Drehsockel 16 ermöglicht es jeder der Personen, das auf die Unterseite der Tischplatte 14 projizierte Bild in korrekter aufrechter Lage zu betrachten. Es ist nicht erforderlich, daß die Videokamera 28 synchron mit dem Tisch 10 mitgedreht wird. Es genügt, wenn der PC 20 aufgrund der Winkelinformation, die ihm der Drehwinkelgeber 18 gegeben hat, die Lage des Bildes 26 relativ zur Videokamera 28 wieder auf die Ausgangslage zurückrechnet.

Die Videokamera 28 kann die Lage eines Objektes, beispielsweise eines Fingers oder besser der Fingerspitze innerhalb der Bildmaske erfassen. Der PC 20 ordnet das erfaßte Objekt bestimmten Bildkoordinaten der Bildmaske zu. Bestimmte Bildpunkte der Bildmaske haben dabei die Funktion von Schaltern. Ergibt das aufgenommene Bild, daß bestimmten Bildpunkten das Objekt zuzuordnen ist, so wird dies als Betätigung dieses Schalters und damit als Eingabe von diesem Schalter zugeordneten Daten gewertet.

Der Tischfuß kann mit einer Tür versehen sein, so daß die im Tischfuß 12 untergebrachten Einheiten für Wartungs- und Servicezwecke leicht zugänglich sind.

### Bezugszeichenliste

- 10: Tisch
- 12: Tischfuß
- 14: Tischplatte
- 16: Drehsockel
- 18: Drehwinkelgeber
- 20: PC
- 22: Videoprojektor
- 24: Objektiv
- 26: Bildmaske
- 28: Videokamera
- 30: Zommobjektiv

## Patentansprüche

1. Vorrichtung zur Darstellung und virtuellen Eingabe von Daten auf einem Arbeitsschirm (14) mit einer bildgebenden Einheit (22) zum Abbilden einer Bildmaske (26) auf dem Arbeitsschirm (14), einer bildaufnehmenden Einheit (28) zur optischen Aufnahme der dargestellten Bildmaske (26) und einer mit beiden Einheiten (22, 28) in Signalverbindung stehenden Datenverarbeitungseinrichtung (20) zur Steuerung der bildgebenden Einheit (22) und zur Verknüpfung von von der bildaufnehmenden Einheit (28) erfaßten Bildelementen mit Bildkoordinaten der auf dem Arbeitsschirm (14) abgebildeten Bildmaske (26), wobei der Arbeitsschirm von einem Abschnitt einer aus einem lichtdurchlässigen und lichtstreuenden Material bestehenden Tischplatte (14) eines Tisches (10) gebildet ist und die bildgebende Einheit (22) unterhalb und die bildaufnehmende Einheit (28) oberhalb der Tischplatte (14) angeordnet ist, dadurch **gekennzeichnet,** daß der Tisch (10) zusammen mit der Abbildung der Bildmaske (26) um eine vertikale Achse drehbar ist und daß dem Tisch (10) ein mit der Datenverarbeitungseinrichtung (20). in Verbindung stehender Drehwinkelmesser (18) zum Erfassen des Drehwinkels derart zugeordnet ist, daß die Position des durch die bildaufnehmende Einheit (28) erzeugten Bildes relativ zur Bildmaske (26) stets gleich ist.

2. Vorrichtung nach Anspruch 1, dadurch **gekennzeichnet,** daß die bildaufnehmende Einheit (28) synchron mit der Drehung des Tisches (10) gedreht wird.

3. Vorrichtung nach Anspruch 1, dadurch **gekennzeichnet,** daß das von der bildaufnehmenden Einheit (28) erzeugte elektronische Bild synchron mit der Drehung des Tisches (10) in der Datenverarbeitungseinrichtung (20) gedreht wird.

4. Vorrichtung nach einem der Ansprüche 1 bis 3, dadurch **gekennzeichnet,** daß die Datenverarbeitungseinrichtung (20) mit der bildgebenden Einheit (22) und/oder der bildaufnehmenden Einheit (28) durch Sende-/Empfangseinrichtungen zur drahtlosen Signalübertragung verbunden ist.

5. Vorrichtung nach einem der Ansprüche 1 bis 4, dadurch **gekennzeichnet,** daß die bildgebende Einheit (22) in einem die Tischplatte (14) tragenden Tischfuß (12) angeordnet ist.

6. Vorrichtung nach einem der Ansprüche 1 bis 5, dadurch **gekennzeichnet,** daß die Datenverarbeitungseinrichtung (20) in einem die Tischplatte (14) tragenden Tischfuß (12) angeordnet ist.

7. Vorrichtung nach einem der Ansprüche 1 bis 6, dadurch **gekennzeichnet,** daß der den Arbeitsschirm bildende Tischplattenabschnitt getönt ist.

8. Vorrichtung nach einem der Ansprüche 1 bis 7, dadurch **gekennzeichnet,** daß die bildaufnehmende Einheit eine Videokamera (28) mit einem Zoomobjektiv (30) ist.

## Claims

1. Apparatus for the display and virtual input of data on a work screen (14), having an imaging unit (22) for depicting an image mask (26) on the work screen (14), an image-recording unit (28) for optically recording the displayed image mask (26), and a data processing device (20), having a signal connection to both units (22, 28), for controlling the imaging unit (22) and for linking image elements detected by the image-recording unit (28) to image coordinates of the image mask (26) depicted on the work screen (14), where the work screen is formed by a portion of a table top (14), made of a translucent and light-dispersing material, of a table (10), and the imaging unit (22) is arranged below the table top (14), and the image-recording unit (28) is arranged above the table top (14), characterized in that the table (10) can be rotated, together with the depiction of the image mask (26), about a vertical axis, and in that a rotationangle measuring device (18), connected to the data processing device (20), for detecting the rotation angle is associated with the table (10) such that the position of the image produced by the image-recording unit (28) relative to the image mask (26) is always the same.

2. Apparatus according to Claim 1, characterized in that the image-recording unit (28) is rotated synchronously with the rotation of the table (10).

3. Apparatus according to Claim 1, characterized in that the electronic image produced by the image-recording unit (28) is rotated synchronously with the rotation of the table (10) in the data processing device (20) .

4. Apparatus according to one of Claims 1 to 3, characterized in that the data processing device (20) is connected to the imaging unit (22) and/or to the image-recording unit (28) by transmission/reception devices for wireless signal transmission.

5. Apparatus according to one of Claims 1 to 4, characterized in that the imaging unit (22) is arranged in a table base (12) supporting the table top (14).

6. Apparatus according to one of Claims 1 to 5, characterized in that the data processing device (20) is arranged in a table base (12) supporting the table top (14).

7. Apparatus according to one of Claims 1 to 6, characterized in that the table top portion forming the work screen is tinted.

8. Apparatus according to one of Claims 1 to 7, characterized in that the image-recording unit is a video camera (28) with a zoom lens (30).

## Revendications

1. Dispositif pour représenter et entrer virtuellement des données sur un écran (14) de travail, comportant une unité (22) générant des images pour reproduire un masque (26) d'image sur l'écran (14) de travail, une unité (28) recevant des images pour la réception optique du masque (26) d'image représenté et un dispositif (20) de traitement de données, qui est en liaison par signaux avec les deux unités (22, 28), pour commander l'unité (22) générant des images et pour combiner des éléments d'image détectés par l'unité (28) recevant des images à des coordonnées d'image du masque (26) d'image reproduit sur l'écran (14) de travail, l'écran de travail étant formé par une partie d'un plateau (14), en un matériau transparent à la lumière et dispersant à la lumière, d'une table (10) et l'unité (22) générant des images étant montée en-dessous du plateau (14) de la table et l'unité (28) recevant des images étant montée au-dessus dudit plateau, caractérisé en ce que la table (10) peut tourner par rapport à un axe vertical conjointement avec la reproduction du masque (26) d'image et en ce qu'il est associé à la table (10) un dispositif (18) de mesure d'angle de rotation qui est en liaison avec le dispositif (20) de traitement de données pour la détection de l'angle de rotation de telle manière que la position de l'image produite par l'unité (28) recevant les images par rapport au masque (26) d'image est toujours la même.

2. Dispositif suivant la revendication 1, caractérisé en ce que l'unité (28) recevant des images tourne en synchronisme avec la rotation de la table (10).

3. Dispositif suivant la revendication 1, caractérisé en ce que l'image électronique produite par l'unité (28) recevant les images tourne en synchronisme avec la rotation de la table (10) dans le dispositif (20) de traitement de données.

4. Dispositif suivant l'une des revendications 1 à 3, caractérisé en ce que le dispositif (20) de traitement de données est relié à l'unité (22) générant les images et/ou à l'unité (28) recevant les images par des dispositifs d'émission/réception servant à la transmission de signaux sans fil.

5. Dispositif suivant l'une des revendications 1 à 4, caractérisé en ce que l'unité (22) générant les images est montée dans un pied (12) de la table portant le plateau (14) de la table.

6. Dispositif suivant l'une des revendications 1 à 5, caractérisé en ce que le dispositif (20) de traitement de données est monté dans un pied (12) de la table portant le plateau (14) de la table.

7. Dispositif suivant l'une des revendications 1 à 6, caractérisé en ce que la partie du plateau de la table formant l'écran de travail est teintée.

8. Dispositif suivant l'une des revendications 1 à 7, caractérisé en ce que l'unité recevant les images est une caméra (28) vidéo comportant un zoom (30).
